# EUROPEAN PATENT APPLICATION

(11) **EP 2 730 462 A1**
(43) Date of publication of application: **14.05.2014**
(21) Application number: 13191538.1
(22) Date of filing: 05.11.2013
(51) Int. Cl.: B60Q 1/26, B60Q 1/32, F21S 8/10, F21V 9/08, F21Y 101/02

(54) **LED Lamp**

(30) Priority: 07.11.2012 CN 201220581936 U
(71) Applicant: Hella KGaA Hueck & Co, 59552 Lippstadt (DE)
(72) Inventor: Liming, Wang, Sanhe Hebei (CN)

(57) **Abstract**

A LED lamp, comprising an enclosure (1), a PCB (4) provided in the enclosure (1), a first light distributing lampshade (2) arranged in one side of the PCB (4) and a second light distributing lampshade (3) arranged in the other side of the PCB (4), wherein a positioning hole is provided on the PCB and a positioning column (11a,11b) which is fitted into the positioning hole is provided on the first light distributing lampshade (2) and second light distributing lampshade (3).

## Description

### FIELD OF THE INVENTION

The present invention relates to LED Lamp.

### Background of the Invention

The types of LED lamp include position lamp, marker lamp and other functionally similar lamps. The position/ marker lamp needs to emit red light and white light at the same time, and meanwhile integration of the position/ marker lamp should be considered. In prior art, there are two different solutions,

1. Connect red/ clear light distributing lampshades together by double-color injection molding or welding, and then a PCB including LED is secured on the enclosure. And the enclosure and light distributing lampshades are sealed together. LED should fit optical surface.

2. Prepare red/ clear light distributing components, and the components and a PCB are secured on the enclosure. LED should fit optical surface. And then the enclosure and light distributing lampshades are sealed together to form the complete lamp.

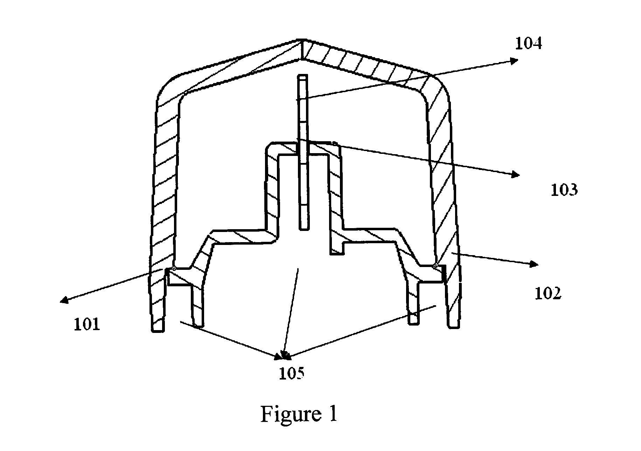

FIG.1 shows a classic LED lamp in prior art, wherein red lampshade 101 and clear lampshade 102 are provided for light distributing. Both components are produced by injection molding, and the two components are connected by ultra-sonic welding.

A pluggable cavity 103 is provided on the enclosure, and a PCB 104 is inserted into the pluggable cavity 103 for securing.

Connect the above mentioned enclosure with the light distributing lampshades by filing seal gum in the area 105 so as to form the complete lamp.

The LED Lamp mentioned above has the following defects,

1. The ultra-sonic welding needs additional cost (for welding equipment, etc). Meanwhile, failure rate of seal structures and appearance for the welded light distributing lampshade is higher than those for molded light distributing lampshade (Although failure rate of seal structures and appearance for the molded light distributing lampshade is lower than those for welded light distributing lampshade, the cost for double-color injection molding is higher however).

2. PCB should be connected with enclosure first, then the cooperative relationship between LED and optical surface should be achieved by installation of enclosure and light distributing lampshade. It will lead to a cumulative tolerance, and a risk for optical effect. And much higher precision accuracies for enclosure, PCB and light distributing lampshade are required.

There is a need for a LED lamp with simpler structure and higher precision accuracies

### SUMMARY OF THE INVENTION

The present invention provides a LED lamp without double-color injection molding or welding. The red/clear light distributing lampshades and PCB including LED are installed directly, and the PCB is hold between red/clear light distributing lampshades without additional components.

The LED lamp comprises an enclosure, a PCB provided in the enclosure, a first light distributing lampshade arranged in one side of the PCB and a second light distributing lampshade arranged in the other side of the PCB. Preferably, the first light distributing lampshade is a red light distributing lampshade; the second light distributing lampshade is a clear light distributing lampshade.

Wherein, a positioning hole is provided on the PCB and a positioning column which is fitted into the positioning hole is provided on the first light distributing lampshade and second light distributing lampshade.

Wherein, the PCB is held in position by engaging part formed on the first and second light distributing lampshades.

Wherein, the LED lamp further comprises a base plate, which, together with the said enclosure, defines an inner space for enclosing the PCB, first and second light distributing lampshades. And the enclosure has a catch; the base plate has a cooperating slot.

Wherein, seal gum is filled in the gap between the enclosure, PCB and/or first and second light distributing lampshades.

Wherein, the LED lamp has a connector, and the PCB has a pin for electrically connecting with the connector.

The above components have the following functions,

Enclosure- made for protecting light distributing components and PCB. And the enclosure has a catch so as to engage with the base plate.

First and second light distributing lampshades - light distributing components. Through the light distributing lampshades, the light emitted by LED fit the light distribution requirement of position/ marker lamp. In addition, the first and second light distributing lampshades have positioning columns for the PCB's positioning hole.

PCB- LED is provided on each of its two sides, and the PCB has a pin for electrically connecting with lamp's connector.

Base plate- made for connecting the LED lamp with car body. The base plate has a slot so as to be connected with the enclosure by plug-in connection.

Connector- made for electrically connecting with car body.

The present invention has the following technical effects,

1. Reducing cost. No additional double-color injection molding or welding equipments are required.

2. Reducing a cumulative tolerance. The light distributing components and PCB including LED are installed directly without additional components (such as enclosure) so as to reduce cumulative tolerance during assembly procedure.

### BRIEF DESCRIPTION OF THE DRAWING FIGURES

FIG. 1 is a structural schematic view of a LED lamp in prior art;

FIG. 2 is a sectional view of a LED lamp without base plate and connector in present application;

FIG. 3 is a sectional view of a LED lamp without base plate and connector in present application;

FIG. 4 is an inner structural schematic view of a LED lamp without base plate and connector in present application;

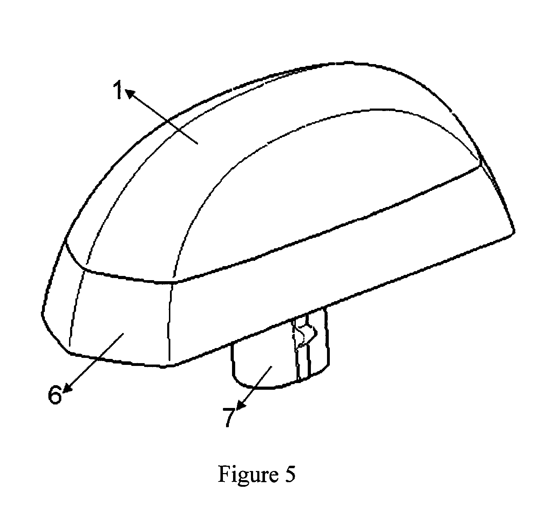

FIG. 5 is a schematic view of a LED lamp with base plate and connector in present application.

### DETAILED DESCRIPTION OF THE INVENTION

The application will be described below in more detail with reference to figures and embodiments.

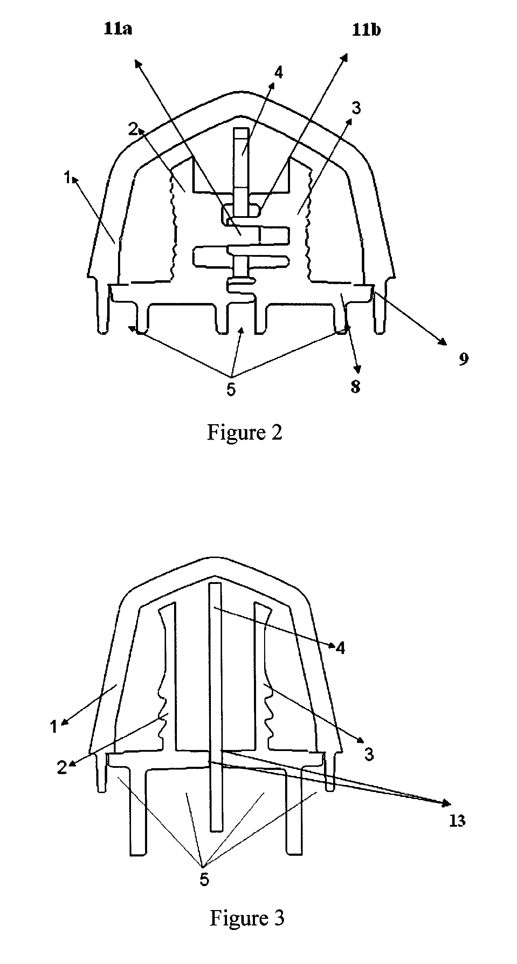

With reference to FIG. 2-4, a particularly preferred embodiment of the invention with simpler structure is illustrated.

The LED lamp of the present application includes an enclosure 1, a PCB 4 provided in the enclosure 1, a first light distributing lampshade 2 arranged in one side of the PCB 4 and a second light distributing lampshade 3 arranged in the other side of the PCB 4. Preferably, the first light distributing lampshade 2 is a red light distributing lampshade; the second light distributing lampshade 3 is a clear light distributing lampshade.

FIG. 2 is a sectional view of a LED lamp without base plate and connector. With reference to FIG. 2, a positioning hole is provided on the PCB 4 and positioning columns 11a, 11b which are fitted into the positioning hole is provided on the first light distributing lampshade 2 and second light distributing lampshade 3. When the above positioning columns 11a, 11b are inserted into the positioning hole, the positioning columns 11a, 11b and the positioning hole are arranged staggered shown in FIG. 2 so as to hold the PCB 4 in position.

FIG. 3 is a sectional view of a LED lamp without base plate and connector. With reference to FIG. 3, the PCB 4 is held in position by engaging parts 13 formed on first and second light distributing lampshades 2, 3 for clamping the PCB 4.

The PCB 4 and light distributing components are installed together by the above positioning columns 11a, 11b and engaging part structure.

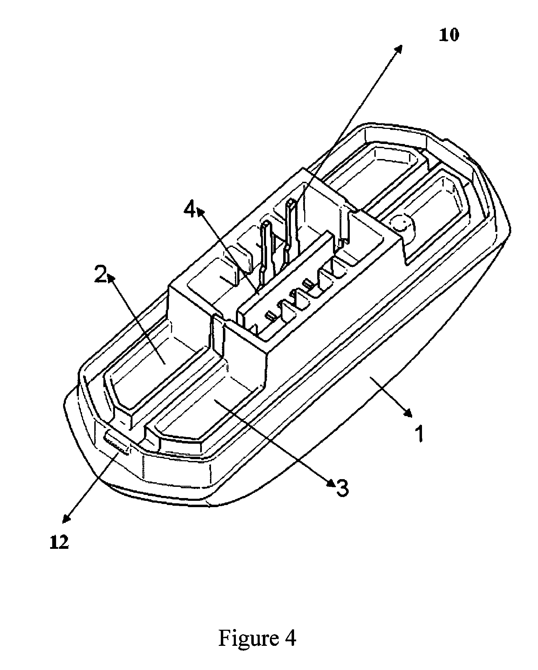

After the PCB 4 and first and second light distributing lampshades 2, 3 are installed together, put the whole into the enclosure 1. With reference to FIG. 2, extension parts 8 are formed in first and second light distributing lampshades2, 3, and depression parts 9 are formed in enclosure 1 so as to engage with the extension parts 8. After the above installation, invert the whole as shown in FIG. 4. With reference to FIG. 4, the PCB 4 is held in position between the first and second light distributing lampshades 2, 3. And the enclosure 1 has catches 12 for engaging with the base plate 6. The PCB 4 has a pin 10 for electrically connecting with car body.

With reference to FIG. 4, the base plate 6 and the enclosure 1 are installed together by the catches 12. The connector 7 is connected together with the PCB 4 through the pin 10. Then, seal gum is filled in the gap 5 (shown in FIG. 2, FIG. 3) between the enclosure 1, PCB 4 and/or first and second light distributing lampshades2, 3 for firmly sealing the LED lamp. After the sealing process, the base plate 6 and the enclosure 1 are installed together by the catches 12 so as to form the complete lamp.

Different with the prior art, the LED lamp of the present application is installed without double-color injection molding or welding so as to reduce cost. And the light distributing components and PCB including LED are installed directly without additional components (such as enclosure) so as to reduce tolerance accumulation during assembly procedure.

It should be appreciated, however, that the embodiments provide many applicable inventive concepts that can be embodied in a wide variety of specific contexts. The specific embodiments discussed are merely illustrative, and do not limit the scope of the disclosure.

## Claims

1. A LED lamp, comprising an enclosure, a PCB provided in said enclosure, a first light distributing lampshade arranged in one side of said PCB and a second light distributing lampshade arranged in the other side of said PCB, wherein a positioning hole is provided on said PCB and a positioning column which is fitted into said positioning hole is provided on said first light distributing lampshade and second light distributing lampshade.

2. LED lamp according to Claim 1, wherein said PCB is held in position by engaging part formed on said first and second light distributing lampshades.

3. LED lamp according to Claim 1, wherein further comprises a base plate, which, together with said enclosure, defines an inner space for enclosing said PCB, first and second light distributing lampshades.

4. LED lamp according to Claim 3, wherein said enclosure has a catch, and said base plate has a cooperating slot.

5. LED lamp according to Claim 3, wherein seal gum is filled in the gap between said enclosure, PCB and/or first and second light distributing lampshades.

6. LED lamp according to Claim 1, wherein said LED lamp has a connector, and said PCB has a pin for electrically connecting with said connector.

7. LED lamp according to Claim 1, wherein said first light distributing lampshade is a red light distributing lampshade, and said second light distributing lampshade is a clear light distributing lampshade.

8. LED lamp according to Claim 1, wherein, when said positioning column is inserted into said positioning hole, said positioning column and said positioning hole is arranged staggered.
